# EUROPEAN PATENT SPECIFICATION

(11) **EP 1 969 400 B1**
(45) Date of publication and mention of the grant of the patent: **18.05.2016**
(21) Application number: 06821442.8
(22) Date of filing: 14.11.2006
(51) Int. Cl.: G02B 5/20, G02F 1/1335

(54) **COLOR FILTERS FOR A ROLLABLE DISPLAY**
FARBFILTER FÜR EINE ROLLBARE ANZEIGE
FILTRES DE COULEUR POUR UN AFFICHAGE ENROULABLE

(30) Priority: 29.11.2005 US 740470 P
(43) Date of publication of application: 17.09.2008
(73) Proprietor: Creator Technology B.V., 4837 BN Breda (NL)
(72) Inventor: VAN LIESHOUT, Pieter, Johannes, Gerardus, NL-5741 EA Beek en Donk (NL); HUITEMA, Hjalmar, Edzer, Ayco, NL-5501 CK Veldhoven (NL)
(74) Representative: Goddar, Heinz J.
(86) International application number: PCT/IB2006/054253
(87) International publication number: WO 2007/063439

(56) References cited:
- WO-A1-2004/027746
- JP-A- 2000 275 632
- US-A1- 4 560 241
- US-A1- 4 690 511
- US-A1- 2002 047 960
- US-A1- 2003 109 286
- US-A1- 2004 070 706

## Description

This disclosure relates to rollable displays, and more particularly to devices and methods for forming color filters on such displays.

Flat panel displays include color filters to remove particular color components from light illuminating from sub-pixels of the display. In conventional devices, the color filter is formed on or applied to internal portions of a display. The top substrate tends to be relatively thick. The larger thickness creates parallax and aperture problems that are common to flat panel displays. In addition, thicker displays are less flexible.

Further, non-intrinsic color displays include a display effect layer, which reflects or emits light with a broad spectrum (white), and a color filter layer, which changes the white light into colored light. The display effect layer and the color filter layer need to be properly aligned to prevent parallax or aperture problems. When making a conformable, flexible or even roll-up display in this way, alignment problems between the display effect layer and the color filter layer can occur due to the different radii of these layers during bending or rolling. Alignment problems can also occur due to the dimensional accuracy and instability of the separately fabricated pixel matrix and color filter matrix. In addition, the distance between the reflecting or emitting layer and the color filter can give rise to significant parallax problems. These alignment and parallax problems may decrease brightness or even color errors and moire effects.

US 2003/0109286 discloses a rollable display.

JP 2000-275 632 discloses a liquid crystal device with flexible front and back substrates in a thickness range of 50 to 100 micrometers sandwiching a liquid crystal layer. Color filters are provided on the exterior surface of one the front substrate.

A liquid crystal device comprising a layer of twisted nematic liquid crystal of 10 micrometers sandwiched between glass plates is disclosed in US patent 4 560 241.

An example for a liquid crystal display panel, which might be used for a portable telephone, is given in the patent document US 2002/0047960 A1. The display comprises a front insulating substrate and a back insulating substrate in between which a liquid crystal layer is disposed. Furthermore, color filter films are provided either on the inner or on the outer side of the insulating substrates. In case the color filter films are provided on the inner side of the insulating substrates adjacent to the liquid crystal layer, parallax effects can be prevented.

A further example for a liquid crystal display is provided by the patent document US 2004/0070706 D2. The liquid crystal display comprises a liquid crystal material, two flexible substrates, a color filter layer, and a three dimensional black mask structure. Due to the three-dimensional black mask structure it is possible to place the color filter layer on the exterior of the display while still maintaining good color performance under off-viewing conditions.

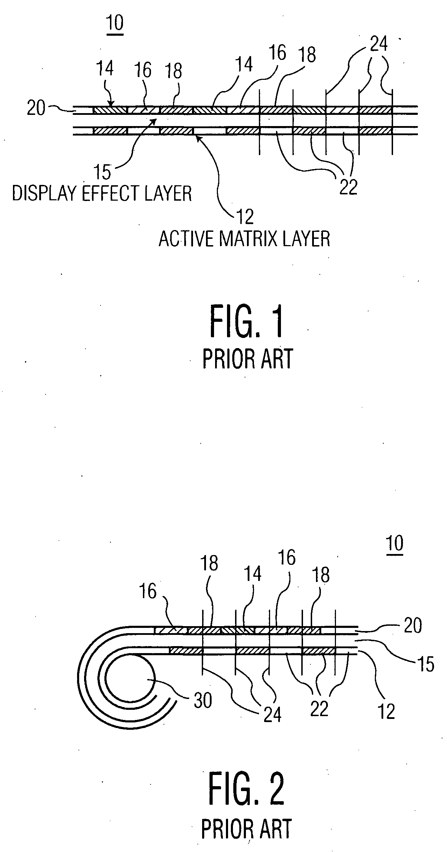

Referring to FIG. 1, an illustrative roll up display 10 is shown to illustrate alignment between pixel structures 22 in an active matrix layer 12 and color filters 14, 16, and 18 in a color filter layer 20. Pixel structures 22 reflect or emit white light which passes through a display effect layer 15 and then an appropriately aligned color filter 14, 16 or 18 corresponding to each subpixel 22. Three sub-pixels 22 form a pixel image that include a red, green and blue component supplied by color filters 14, 16 and 18 respectively. Lines 24 are shown to illustrate alignment between sub-pixels 22 and color filters 14, 16 and 18. Referring to FIG. 2, display 10 is shown being rolled up onto a roller or spool 30. Due to the radius of the spool 30, misalignment occurs between color filters 14, 16 and 18 and sub-pixels 22. Misalignment between color filters 14, 16 and 18 in layer 20 and sub-pixels 22 is illustrated by lines 24. The misalignment can cause parallax problems, decrease brightness and cause color errors and Moir• effects in the displayed image.

Embodiments or the present disclosure describe color filters formed or applied to an outside (exterior surface) of a rollable or flexible display. By employing specially dimensioned substrates for color filters, rollable displays may employ color filters that are not only properly aligned but permit the display to be flexibly folded or rolled. In addition, parallax and aperture problems are reduced or eliminated by employing the present principles.

One advantage that is gained by the color filters applied in accordance with these principles includes enablement of the possibility of using alternative depositing methods for forming the color filter. Another advantage includes that the color filter can be formed at a last step or nearly a last step in the fabrication process. This enables optimal alignment with sub-pixels in a display during color filter deposition and permits applying corrections for dimensional changes during color filter processing.

A flexible display includes a display effect layer formed on a back plane substrate configured and dimensioned to be flexible. A front plane substrate is configured and dimensioned to be flexible and is mounted on the display effect layer. The front plane substrate includes a color filter formed thereon such that aperture and a parallax effects are controlled due to proximity between the display effect layer and the color filter. Methods for fabricating flexible displays are also disclosed.

These and other objects, features and advantages of the present disclosure will become apparent from the following detailed description of illustrative embodiments thereof, which is to be read in connection with the accompanying drawings. This disclosure will present in detail the following description of preferred embodiments with reference to the following figures wherein:
FIG. 1 is a cross-sectional view of a flexible display in accordance with the prior art;
FIG. 2 is a cross-sectional view of the flexible display of FIG. 1 showing misalignment between sub-pixels and color filters;
FIG. 3 is a cross-sectional view of a flexible display in accordance with one illustrative embodiment;
FIG. 4 is a cross-sectional view of a flexible display employing E Ink in the display effecting layer in accordance with another illustrative embodiment;
FIG. 5 is a cross-sectional view of a front plane having a color filter formed in accordance with another illustrative embodiment;
FIG. 6 is a cross-sectional view of a front plane having a color filter formed on a bottom side of the front plane substrate in accordance with yet another illustrative embodiment; and
FIG. 7 is a flow diagram showing illustrative methods for fabricating a color filter in accordance with embodiments of the present invention.

The present disclosure provides embodiments for a flexible or roll up display that includes improved alignment between sub-pixels and a color filter to improve display viewing quality. In addition, a color filter is placed outside the display to permit the formation of the color filter to be completed later in the fabrication process to customize the color filter placement relative to the pixels.

It should be understood that the elements shown in the FIGS. may be implemented in various configurations. For illustrative purposes, embodiments will be described herein in terms of a liquid crystal display type that includes polymeric substrates, which permit flexible or roll up displays to be formed. Other types of displays may also benefit from the teachings herein. For example, electrophoretic display medium (such as those from the manufacturer E Ink Corporation which are based on encapsulated electrophoretic ink particles) displays, electroluminescent displays, etc. may employ the teachings herein.

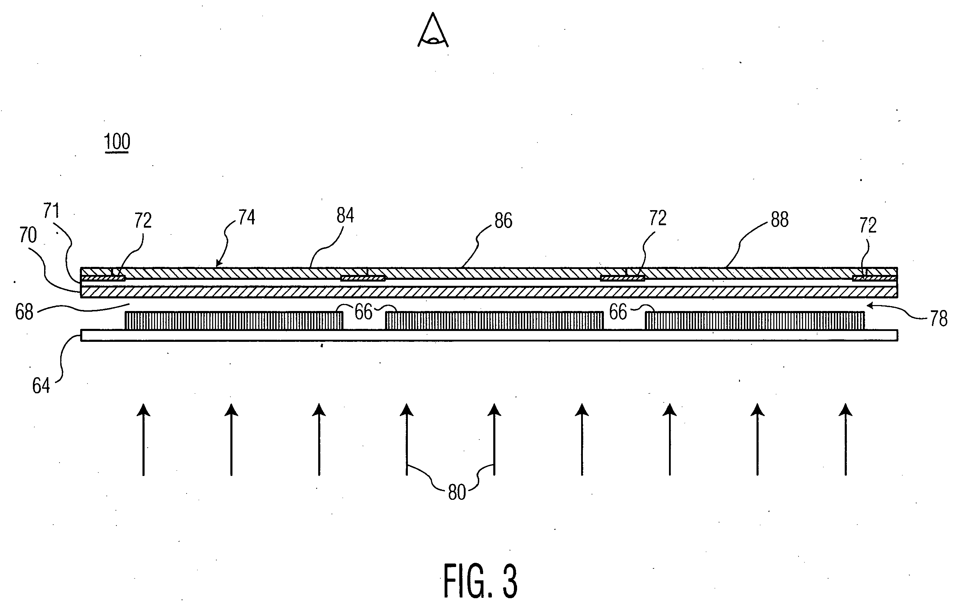

Referring now to the drawings in which like numerals represent the same or similar elements and initially to FIG. 3, a cross-sectional view of a flexible display 100 is shown in accordance with principles of one embodiment. A display effect layer 78 includes materials for the transmission and dispersion of light. In the embodiment of FIG. 3, the display effect layer 78 may include liquid crystal, E ink capsules or any other emitting or reflective material for guiding light to a viewer. A backplane substrate 64 may include a flexible polymer material on which pixels 66 and other electronic components are formed. These electronic components may include transistors (thin film transistors TFT), capacitors, conductive lines, etc. For simplicity only pixels 66 are shown. For a back lit embodiment, light 80 is passed through substrate 64 or other back end device to provide light through pixels 66. Other embodiments may include reflective displays where light is reflected from pixels 66 from the viewing side of the pixels 66. A cell gap 68 is filled with liquid crystal, E ink capsules or other display effect material which is responsive to pixels 66. For example, when activated the pixels 66 cause orientation of the liquid crystal or a change in the E ink capsules as is known in the art. A substrate 71 may include a common electrode 70 formed thereon. The common electrode 70 cooperates with the pixels 66 to orient the adjacent liquid crystal material or adjust the E ink to an appropriate state.

A black matrix 72 may be formed on substrate 71 or between substrate 71 and common electrode 70. Black matrix 72 blocks out stray light to remove fuzziness from viewed displayed images. Black matrix 72 also forms apertures for pixel light to pass through. The apertures (spaces between portions of black matrix 72) are aligned to the pixels 66 and may be formed using a photolithography process/patterning.

Advantageously, a color filter layer 74 is formed on substrate 71 (and possible on black matrix 72). By depositing the color filter layer very near to the reflecting or emitting layer formed by the display effect layer 78, alignment and parallax problems can be prevented. In conformable, flexible or roll-up displays, the substrates 64 and 71 used in both backplane and front plane are thin to enable the display to fold or roll-up. The color filter 74 is preferably formed on the front plane surface and due to the thin substrates, without parallax problems. The thinness of the substrates can be determined by comparing pixel size with the cell gap 68 (the difference between the pixel and the common electrode). The pixel size is preferably larger than the cell gap 68 to achieve a good quality display. In an illustrative embodiment, the substrates 64 and 71 are about 200 microns or less and preferably about 25 microns or less (the cell gap is, e.g., about 200 microns or less). Pixel size may be, for example, about 300 microns by about 300 microns.

As shown in FIG. 3, the color filter layer 74 may be formed in a plurality of steps. The color filter layer 74 preferably includes materials capable of filtering out all components of light except for a given wavelength. The color filter includes a red (R) portion 84 and green (G) portion 86 and a blue (B) portion 88. The RGB portions 84, 86 and 88 are formed separately in the same layer 74. Pixels 66 illuminate white light which is filtered by color filter layer 74 to permit the appropriate color (Red, Green or Blue) to radiate therefrom. Three pixels 66 (sub-pixels) form a single pixel image for a viewer. Color filter layer 74 may be combined with a scratch protection layer, a humidity barrier or other films or layers.

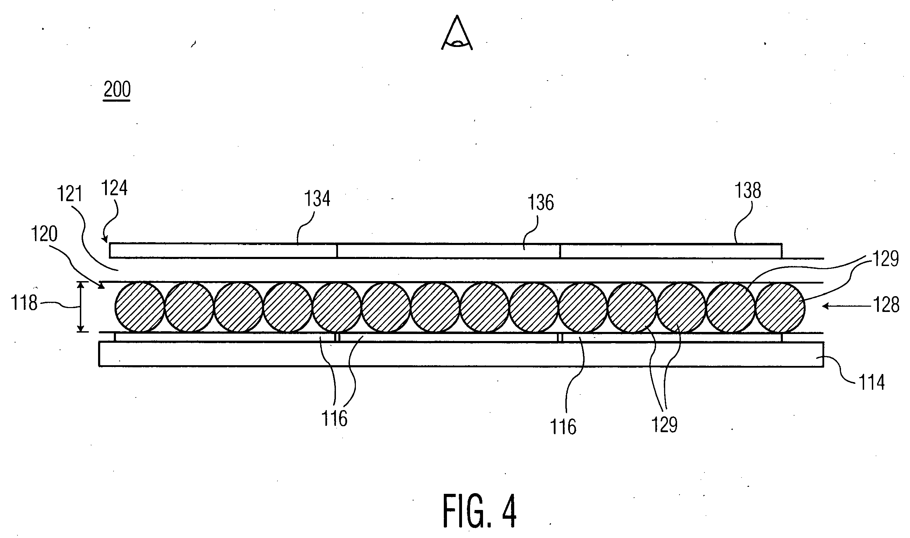

Referring to FIG. 4, a cross-sectional view of a flexible display 200 is shown in accordance with a preferred embodiment. A display effect layer 128 includes materials for the transmission and dispersion of light. The display effect layer 128 includes E ink capsules 129 which emit or reflect light to a viewer to create an image. A backplane substrate 114 may include a flexible polymer material on which pixels 116 and other electronic components are formed. These electronic components may include transistors (thin film transistors TFT), capacitors, conductive lines, etc. For simplicity only pixels 116 are shown. A cell gap 118 includes E ink capsules 129, which are responsive to pixel voltages. For example, when activated the pixels 116 cause orientation the E ink capsules to adjust to a desired state as is known in the art. A substrate 121 may include a common electrode 120 formed thereon to cooperate with the pixels 116 to employ the display effect layer 128.

Apertures to screen out stray light may be employed (e.g., black matrix. 72 of FIG. 3); however, advantageously, since the present embodiment is thin and color filters are closely aligned with pixels, the black matrix may be omitted from the design. A color filter layer 124 is formed on substrate 121. By depositing the color filter layer 121 very near to the reflecting or emitting layer formed by the display effect layer 128, alignment and parallax problems can be prevented. In roll-up displays, the substrates 114 and 121 used in both backplane and front plane are sufficiently thin to enable the display to fold or roll-up. The color filter layer 124 is preferably formed on the front plane surface and, due to the thin substrates, parallax problems are reduce or eliminated. In an illustrative embodiment, the substrates 114 and 121 are about 200 microns or less and preferably about 25 microns or less (the cell gap is, e.g., about 200 microns or less). Pixel size may be, for example, 300 microns by 300 microns.

The color filter layer 124 may be formed in a plurality of steps as described with respect to FIG. 3. The color filter includes a red (R) portion 134 and green (G) portion 136 and a blue (B) portion 138. The RGB portions 134, 136 and 138 are formed separately in a same layer 124 by deposition and patterning using photolithography or other formation methods. Color filters may include materials between about 100nm and about 10 microns in thickness and formed from polymer materials.

Deposition of color filters 134, 136 and 138 may be performed by spin coating, spray coating, evaporating, doctor blading or similar deposition methods. The deposition is followed by photolithography to pattern color filters into stripes or patches, followed by a next color filter deposition and patterning until all color filter are formed. Screen-printing or inkjet printing may be employed to directly deposit patterned color filters.

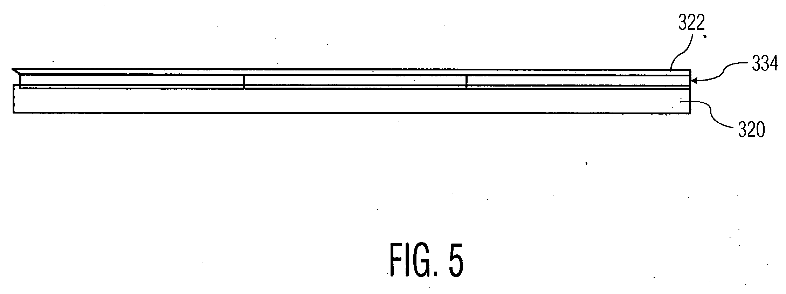

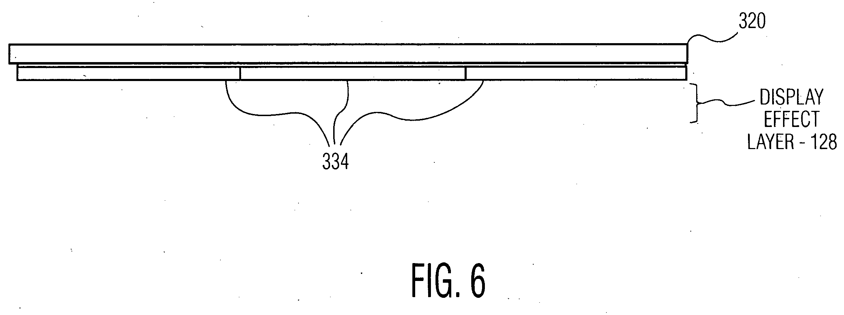

Referring to FIG. 5, a front plane substrate 320 may include color filters 334 formed prior to assembly with the rest of the display or may be formed on the top of a display. In one embodiment, a first set of color filters 334 are formed on the substrate 320 followed by a cover layer, scratch protection layer, humidity barrier 322 or combination thereof. Scratch protection layer 322 may include a polymeric material preferably with a greater hardness than the color filter layer and preferably includes a thickness of less than about 25 microns. In an alternate embodiment, the color filters 324. may be formed on a bottom side of the front plane substrate 320 and face the display effect layer 128 as shown in FIG. 6.

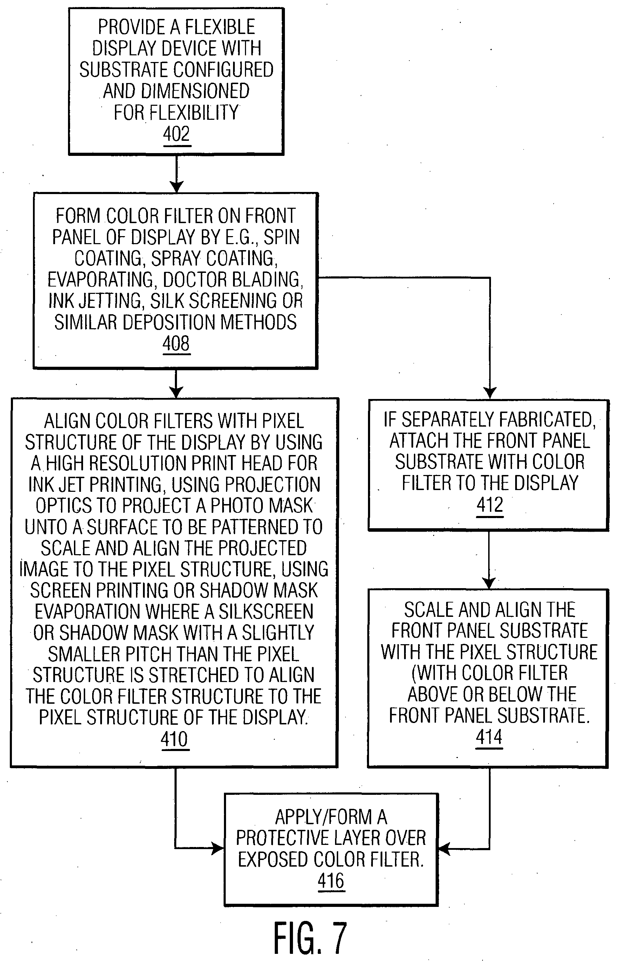

Referring to FIG. 7, a flow diagram describing methods for fabricating a flexible/roll-up/conformable display with a color filter that is exterior to the display device is illustratively shown. In block 402, a display device is provided having a display effect layer and a thin backplane substrate. A thin front plane substrate is mounted on the display. Alternately, the thin front plane is maintained separately and added after the formation of color filters thereon in block 410, described below.

In block 408, the color filter is formed. Many processes may be employed for forming the color filter. These options for deposition techniques are afforded by the fact that the color filter layer is advantageously formed at a late stage in the processing. For example, spin coating, spray coating, evaporating, doctor blading, ink jetting, silk screening or similar deposition methods may be employed to form the color filters, among other techniques. The formation of the color filter may include photolithography to pattern color filters into stripes or patches, followed by a next color filter deposition and patterning until all color filters are formed. Screen-printing or inkjet printing may also be employed to directly deposit patterned color filters.

In block 410, alignment of the color filters is performed relative to the pixels in the pixel structure of the display device. Depending on the method of forming the color filter, the alignment step may be performed simultaneously with the formation of the color filters. For example, in ink jet printing, the alignment is performed while the color filters are being printed. When ink jet printing the color filter, a high resolution print head can be used to ensure proper alignment. By inspecting the exact location of the display pixel structure, the color filter can be printed at the correct position on the display.

When using photolithography to pattern the color filters, projection optics may be used to project a photo mask unto a surface to be patterned (e.g., a front plane of the display) which can be used to scale and align the projected image to the pixel structure of the display.

When using screen printing or shadow mask evaporation, a silkscreen or shadow mask can be used with a slightly smaller pitch than the pixel structure of the display. The silk screen or shadow mask can then be stretched to align the color filter structure to the pixel structure of the-display.

In block 412, the front plane with the color filter formed thereon is placed over the display effect layer if the front plane substrate with color filter was separately manufactured. This is optional. Scaling or other alignment methods are employed to ensure proper alignment between the pixels and the color filters, in block 414. The color filter may be installed with the color filter on top or on the bottom of the front plane substrate.

In block 416, a protective layer, such as a scratch protection layer or humidity barrier may be deposited on the color filter to protect the color filter during operation.

Having described preferred embodiments for a roll up display with color filters and methods for fabrication of the same (which are intended to be illustrative and not limiting), it is noted that modifications and variations can be made by persons skilled in the art in light of the above teachings. It is therefore to be understood that changes may be made in the particular embodiments of the disclosure disclosed which are within the scope and spirit of the embodiments disclosed herein as outlined by the appended claims. Having thus described the details and particularity required by the patent laws, what is claimed and desired protected by Letters Patent is set forth in the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function; and
e) no specific sequence of acts is intended to be required unless specifically indicated.

## Claims

1. A display adapted to be rolled up (100, 200), comprising:
a display effect layer (78, 128) formed on a back plane substrate (64, 114) configured and dimensioned to be rolled up; and
a front plane substrate (71, 121, 320) configured and dimensioned to be rolled up and being mounted on the display effect layer (78, 128); and
a color filter (74, 124, 334) formed on a side of the front plane substrate (71, 121, 320) opposite the display effect layer (78, 128), said color filter (74, 124, 334) being in direct alignment with a pixel structure (66, 116) formed on the back plane substrate (64, 114);
wherein the display effect layer (78, 128) has a thickness of 200 microns or less and the front plane substrate (71, 121, 320) has a thickness of about 25 microns or less such that aperture and parallax effects are controlled due to the proximity between the display effect layer (78, 128) and the color filter (74, 124, 334).

2. The display as recited in claim 1, further comprising a scratch protection layer (322) formed on the color filter layer (74, 124, 334).

3. The display as recited in one of the preceding claims, wherein the back plane substrate (64, 114) is 200 microns or less in thickness.

4. The display as recited in one of the preceding claims, wherein the color filter (74, 124, 334) is formed on an exterior surface of the front plane substrate (71, 121, 320).

5. A method for fabricating a display device adapted to be rolled up, comprising:
providing (402) a display (100, 200) having a back plane substrate (64, 114) and a front plane substrate (71, 121, 320) with a display effect layer (78, 128) disposed between the substrates (64, 114 and 71, 121, 320), said front plane substrate (71, 121, 320) having a thickness of about 25 microns or less, and said display effect layer (78, 128) having a thick-ness equal to or less than 200 microns, each substrate being configured and dimensioned to be rolled up; and
forming (408), on the front plane substrate (71, 121, 320) on a side opposite to the display effect layer (78, 128), a color filter (74, 124, 334) in direct alignment with a pixel structure (66, 116) formed on the back plane substrate (64, 114) such that aperture and parallax effects are controlled due to the proximity between the display effect layer (78, 128) and the color filter (74, 124, 334) and due to improved alignment resulting from formation of the color filter (74, 124, 334) on top of the display (100, 200).

6. The method as recited in claim 5, wherein the forming (408) includes depositing and patterning the color filter (74, 124, 334) using photolithography.

7. The method as recited in claim 5 or 6, further comprising employing (410) projection optics to align the color filter (74, 124, 334) to the pixel structure (66, 116).

8. The method as recited in one of the claims 5 to 7, wherein the forming (408) includes ink jet printing the color filter (74, 124, 334) by printing the color filter (74, 124, 334) in alignment with the pixel structure (66, 116).

9. The method as recited in one of the claims 5 to 8, wherein the forming (408) includes silk screening/shadow masking to form the color filter (74, 124, 334) by stretching a silkscreen/shadow mask to align the color filter (74, 124, 334) to the pixel structure (66, 116).

10. The method as recited in one of the claims 5 to 9, further comprising applying (416) a protection coating (322) to the color filter (74, 124, 334).

## Patentansprüche

1. Zum Aufrollen eingerichtete Anzeigeeinrichtung (100, 200) mit:
einer Anzeigeneffektschicht (78, 128), welche auf einem rückseitigen Substrat (64, 114) ausgebildet und zum Aufrollen eingerichtet und dimensioniert ist; und
einem vorderseitigen Substrat (71, 121, 320), welches zum Aufrollen konfiguriert und dimensioniert ist und auf der Anzeigeneffektschicht (78, 128) aufgebracht ist; und
einem Farbfilterelement (74, 124, 334), welches an einer Seite des vorderseitigen Substrats (71, 121, 320) entgegengesetzt der Anzeigeneffektschicht (78, 128) ausgebildet ist, wobei das Farbfilterelement (74, 124, 334) in direkter Ausrichtung mit einer Pixelstruktur (66, 116), welche auf dem rückseitigen Substrat (64, 114) ausgebildet ist, ist;
wobei die Anzeigeneffektschicht (78, 128) eine Dicke von 200 Mikron oder weniger aufweist und das frontseitige Substrat (71, 121, 320) eine Dicke von ungefähr 25 Mikron oder weniger aufweist, so dass Apertur- und Parallaxeneffekte aufgrund der Nähe zwischen der Anzeigeneffektschicht (78, 128) und dem Farbfilterelement (74, 124, 334) kontrolliert sind.

2. Anzeigeeinrichtung nach Anspruch 1 mit zusätzlich einer Verkratrungsschutzschiclot (322), welche auf der Farbfilterschicht (74, 124. 334) ausgebildet ist.

3. Anzeigeeinrichtung nach einem der vorangehenden Ansprüche, bei welcher das rückseitige Substrat (64, 114) eine Dicke von 200 Mikron oder weniger aufweist.

4. Anzeigeeinrichtung nach einem der vorangehenden Ansprüche, bei welcher das Farbfilterelement (74, 124, 334) auf einer äußeren Oberfläche des vorderseitigen Substrats (71, 121, 320) ausgebildet ist.

5. Verfahren zum Ausbilden einer zum Aufrollen eingerichteten Anzeigenvorrichtung mit folgenden Schritten:
Bereitstellen (402) einer Anzeigeneinrichtung (100, 200) mit einem rückseitigen Substrat (64, 114) und einem vorderseitigen Substrat (71, 121, 320) sowie einer Anzeigeneffektschicht (78, 128), welche zwischen den Substraten (64, 114 und 71, 121, 320) ausgebildet ist, wobei das vorderseitige Substrat (71, 121, 320) eine Dicke von ungefähr 25 Mikron oder weniger aufweist und die Anzeigeneffektschicht (78, 128) eine Dicke von 200 Mikron oder weniger aufweist, wobei jedes Substrat zum Aufrollen eingerichtet und dimensioniert ist; und
Ausbilden (408) eines Farbfilterelements (74, 124, 334) auf dem vorderseitigen Substrat (71, 121, 320) auf einer Seite, welche der Anzeigeneffektschicht (78, 128) entgegengesetzt ist, in direkter Ausrichtung mit einer auf dem rückseitigen Substrat (64, 114) ausgebildeten Pixelstruktur (66, 116), so dass Apertur- und Parallaxeneffekte aufgrund der Nähe zwischen der Anzeigeneffektschicht (78, 128) und dem Farbfilterelement (74, 124, 334) und aufgrund einer verbesserten Ausrichtung, welche sich aus der Ausbildung des Farlafilterelements (74, 124, 334) auf der Oberseite der Anzeigeneinrichtung (100, 200) ergibt, kontrolliert sind.

6. Verfahren nach Anspruch 5, bei welchem das Ausbilden (408) das Auftragen und Strukturieren des Farbfilterelements (74, 124, 334) unter Verwendung von Fotolithographie umiasst.

7. Verfahren nach Anspruch 5 oder 6 mit zusätzlich dem Verwenden (410) von Projektionsoptiken zum Ausrichten der Farbfilterelemente (74, 124, 334) an die Pixelstruktur (66, 116).

8. Verfahren nach einem der Ansprüche 5 bis 7, bei welchem das Ausbilden (408) ein Tintenstrahldrucken des Farbfilterelements (74, 124, 334) mittels Drucken des Farbfilterelements (74, 124, 334) in Ausrichtung zu der Pixelstruktur (66, 116) umfasst.

9. Verfahren nach einem der Ansprüche 5 bis 8, bei welchem das Ausbilden (408) ein Siebdrucken/Lochmaskieren zum Ausbilden des Farbfilterelements (74, 124, 334) mittels Spannen einer Siebdruckmaske/Lochmaske zum Ausrichten des Farbfilterelements (74, 124, 334) an der Pixelstruktur (66, 116) umfasst.

10. Verfahren nach einem der Ansprüche 5 bis 9, mit zusätzlich dem Schritt des Aufbringens (416) einer Schutzschicht (322) auf das Farbfilterelement (74, 124, 334).

## Revendications

1. Un affichage adapté pour être enroulé (100, 200), comprenant :
une couche d'effet d'affichage (78, 128) formée sur un substrat arrière plan (64, 114) configuré et dimensionné pour être enroulé ; et
un substrat avant plan (71, 121, 320) configuré et dimensionné pour être enroulé et qui est monté sur la couche d'effet d'affichage (78, 128) ; et
un filtre de couleur (74, 124, 334) formée sur un côté du substrat avant plan (71, 121. 320) à l'opposé de la couche d'effet d'affichage (78, 128), ledit filtre de couleur (74, 124, 334) étant en alignement direct avec une structure de pixels (66, 116) formée sur le substrat arrière plan (64, 114) ;
dans lequel la couche d'effet d'affichage (78, 128) a une épaisseur de 200 microns ou moins et le substrat avant plan (71, 121, 320) a une épaisseur d'environ 25 microns ou moins de telle sorte que les effets d'ouverture et de parallaxe sont contrôlés en raison de la proximité entre la couche d'effet d'affichage (78, 128) et le filtre de couleur (74, 124, 334).

2. L'affichage selon la revendication 1, comprenant en outre une couche de protection contre les éraflures (322) formée sur la couche du filtre de couleur (74, 124, 334).

3. L'affichage selon l'une quelconque des revendications précédentes, dans lequel le substrat arrière plan (64, 114) a une épaisseur de 200 microns ou moins.

4. L'affichage selon l'une quelconque des revendications précédentes, dans lequel le filtre de couleur (74, 124, 334) est formé sur une surface extérieure du substrat avant plan (71, 121, 320).

5. Un procédé de fabrication d'un dispositif d'affichage adapté pour être enroulé, comprenant :
la fourniture (402) d'un affichage (100, 200) ayant un substrat arrière plan (64, 114) et un substrat avant plan (71, 121, 320) avec une couche d'effet d'affichage (78, 128) disposée entre les substrats (64, 114 et 71, 121, 320), ledit substrat avant plan (71, 121, 320) ayant une épaisseur d'environ 25 microns ou moins, et ladite couche d'effet d'affichage (78, 128) ayant une épaisseur égale ou inférieure à 200 microns, chaque substrat étant configuré et dimensionné pour être enroulé ; et
la formation (408) sur le substrat avant plan (71, 121, 320) sur un côté à l'opposé de la couche d'effet d'affichage (78, 128), d'un filtre de couleur (74, 124, 334) en alignement direct avec une structure de pixels (66, 116) formée sur le substrat arrière plan (64, 114) de telle sorte que les effets d'ouverture et de parallaxe sont contrôlés en raison de la proximité entre la couche d'effet d'affichage (78, 128) et le filtre de couleur (74, 124, 334) et en raison de l'alignement amélioré résultant de la formation du filtre de couleur (74, 124, 334) au-dessus de l'affichage (100, 200).

6. Le procédé selon la revendication 5, dans lequel la formation (408) inclut la déposition et la formation de motifs du filtre de couleur (74, 124, 334) à l'aide de la photolithographie.

7. Le procédé selon la revendication 5 ou 6, comprenant en outre l'emploi (410) d'optiques de projection pour aligner le filtre de couleur (74, 124, 334) avec la structure de pixels (66, 116).

8. Le procédé selon l'une des revendications 5 à 7, dans lequel la formation (408) inclut l'impression par jet d'encre du filtre de couleur (74, 124, 334) en imprimant le filtre de couleur (74, 124, 334) en alignement avec la structure de pixels (66, 116).

9. Le procédé selon l'une des revendications 5 à 8, dans lequel la formation (408) inclut la sérigraphie / le masquage perforé pour former le filtre de couleur (74, 124, 334) en étirant un écran de sérigraphie / un masque perforé pour aligner le filtre de couleur (74, 124, 334) avec la structure de pixels (66, 116).

10. Le procédé selon l'une des revendications 5 à 9, comprenant en outre l'application (416) d'un revêtement de protection (322) sur le filtre de couleur (74, 124, 334).
